# EUROPÄISCHE PATENTSCHRIFT

(11) **EP 0 419 611 B1**
(45) Veröffentlichungstag und Bekanntmachung des Hinweises auf die Patenterteilung: **10.11.1993**
(21) Anmeldenummer: 90904597.3
(22) Anmeldetag: 23.03.1990
(51) Int. Cl.: G01L 1/18

(54) **VERFAHREN ZUM HERSTELLEN EINES SENSORS ZUM BESTIMMEN VON DRUCKKRÄFTEN**
PROCESS FOR PRODUCING A SENSOR FOR THE MEASUREMENT OF COMPRESSIVE FORCES
PROCEDE POUR LA FABRICATION DE CAPTEURS DE MESURE D'EFFORTS DE COMPRESSION

(30) Priorität: 14.04.1989 DE 3912280
(43) Veröffentlichungstag der Anmeldung: 03.04.1991
(73) Patentinhaber: ROBERT BOSCH GMBH, 70442 Stuttgart (DE)
(72) Erfinder: ZIMMERMANN, Herbert, D-7141 Freiberg/Heutingsheim (DE); GRUENWALD, Werner, D-7016 Gerlingen (DE); HECHT, Hans, D-7015 Korntal (DE); MAST, Martin, D-7016 Gerlingen (DE)
(86) Internationale Anmeldenummer: DE9000237
(87) Internationale Veröffentlichungsnummer: WO9013011

(56) Entgegenhaltungen:
- EP-A- 0 140 064
- EP-A- 0 338 180
- EP-A- 0 348 657
- PATENT ABSTRACTS OF JAPAN, Band 6, Nr. 129 (P-128) (1007), 15. Juli 1982; & JP-A-5754829
- INTER ELECTRONIQUE, Nr. 121, 28 Januar 1974, "Bourns fabrique des capteurs de pression", Seiten 28-29
- DESIGN ENGINEERING, September 1984, (London, GB), "Ceramic diaphragm transducer offers control up to 3000 lb/in2", Seiten 145, 149
- PATENT ABSTRACTS OF JAPAN, Band 11, Nr. 109 (P-564) (2556), 7 April 1987; & JP-A-61259134
- PROCEEDINGS OF THE NAT. ELECTR. CONFERENCE, Band 28, 8.-10. Oktober 1973, S. Calebotta: "Design and applications of integrated pressure transducers", Seiten 383-389

## Beschreibung

### Stand der Technik

Die Erfindung betrifft ein Verfahren zum Herstellen eines Sensors entsprechend dem Oberbegriff des Hauptanspruchs. Ein derartiger Sensor ist in der älteren europäischen Patentanmeldung gemäß EP-A- 348 657 (veröffentlicht 3.1.90) beschrieben, wobei zur Bestimmung des Drucks oder der Kraft auf einem Träger ein Dickschichtwiderstand aufgedruckt und anschließend im noch weichen Zustand durch ein aufgesetztes Krafteinleitungsteil plangedrückt wird. Hierdurch ergibt sich eine weitgehend eingeebnete Oberfläche, welche für viele Anwendungsfälle geeignet ist.

Aus der Schrift "Design Engineering", September 1984 (Seiten 145,149) ist ein Drucksensor vorbekannt, bei dem Dickschichtwiderstände über Leiterbahnen auf eine als Membran dienende Keramikplatte aufgebracht sind.

Aus der EP-A 214 468 ist ein Drucksensor bekannt mit einem plättchenförmigen Grundkörper aus einem Stahlsubstrat, an dessen dem Meßdruck abgewandter Seite eine Membran aus Glaskeramik angebracht ist. Diese dehnt sich unter Druckeinwirkung. Das Maß der Dehnung wird durch an der Oberseite der Membran angeordnete Dehnmeßstreifen erfaßt. Diese Anordnung hat den Nachteil, daß zum Aufbringen der Membran ein zusätzlicher Arbeitsschritt notwendig wird. Ferner verhalten sich der Stahlgrundkörper und die Glasmembran bei Temperaturschwankungen sehr unterschiedlich, so daß große Temperaturfelher korrigiert werden müssen. Beim Auftreten sehr hoher Kräfte ist die Übertragung auf Membrandehnungen nicht sinnvoll. Dort werden die Dickschicht-Widerstände direkt den wirkenden Kräften ausgesetzt.

Allerdings kann auf diese Weise nur ein bestimmter Kraftbereich abgedeckt werden, in dem durch die Pressung der Dickschichtwiderstände genügend große Signale entstehen.

### Vorteile der Erfindung

Durch ein Verfahren der in Anspruch 1 genannten Art wird ein Drucksensor geschaffen, bei dem die Einleitung der Druckkraft zum Messen verbessert ist. Der so erhaltene Sensoraufbau ermöglicht eine kostengünstige Herstellung robuster Sensoren, die in einem großen Temperaturbereich eingesetzt werden können. Vorteilhaft sind insbesondere folgende Punkte:

Wird ein metallisches Sensorsubstrat verwendet, so ist vor allem die Stabilität des gesamten Drucksensors hervorzuheben. Er ist auch bei starker mechanischer Beanspruchung verwendbar.

Des weiteren sind sehr einfache Gehäusekonzepte realisierbar, so daß die Montagekosten gering gehalten werden können. Die Dickschichttechnik, mit der die Widerstände aufgebracht werden, ist eine Technik zur Realisierung sehr zuverlässiger Sensorelemente und Auswerteschaltungen. Sie kann in einem großen Temperaturbereich eingesetzt werden (- 50° C bis 200° C) und weist eine gute Langzeitstabilität auf. Der Aufbau von Sensorelement und Auswerteschaltung ist in einer einheitlichen Technologie realisierbar.

Aufwendige Verbindungen zwischen Sensorelement und Auswerthybrid entfallen. Die Dickschichttechnik ist geeignet für die vollautomatische Herstellung in sehr großen Stückzahlen. Der Sensorhybrid kann sehr kostengünstig hergestellt werden.

Auf dem Sensorsubstrat können mit relativ geringem Aufwand unterschiedliche Auswertschaltungen für spezielle Anwendungen (z. B. Sensor-Aktuatoren) realisiert werden. Das Sensorsubstrat selbst wird sehr flexibel unterschiedlichen Gehäuseformen und Anwendungsvarianten angepaßt.

Wesentlich ist u. a., daß der Kraftsensor auch in seiner Oberfläche einer druckbeaufschlagenden Fläche angeglichen wird. Hierzu ist es in Vielen Fällen notwendig, daß die Oberfläche des Sensors planparallel zur Unterfläche des Substrates verläuft. In einem Ausführungsbeispiel der Erfindung ist daran gedacht, lediglich die Oberfläche der Dickschichtwiderstände abzuschleifen. Verbessert wird dies jedoch dadurch, daß die Dickschichtwiderstände in ein Isolierglas eingebettet und dieses dann plan geschliffen wird, wobei gleichzeitig auch die Oberfläche des Dickschichtwiderstandes plan geschliffen ist oder bei entsprechender Auffütterung nur das Isolierglas plan geschliffen wird.

Des weiteren ist daran gedacht, die Dickschichtwiderstände in einer Gießmasse, bevorzugt aus Kunststoff, Epoxidharz, Lack od. dgl. einzubetten und deren Oberfläche planparallel zu schleifen.

Besonders bevorzugt wird ein Verfahren, bei dem die Dickschichtwiderstände in ein Dickschichtglas eingebettet werden, auf welches dann eine metallische Gegenscheibe aufgeglast und diese abgeschliffen wird.

Auf dem Drucksensor selbst sollen die Dickschichtwiderstände in bestimmten Konfigurationen angeordnet sein. Als Verbindung der Widerstände bietet sich eine Brückenschaltung an. Der in der Regel erforderliche Offset-Abgleich der Widerstände wird über ein weiteres Widerstandsnetzwerk durchgeführt. Ebenfalls ein Widerstandsnetzwerk nimmt eine Temperaturkompensation der Widerstände vor.

Weitere Merkmale, Vorteile und Einzelheiten der Erfindung ergeben sich aus der nachfolgenden Beschreibung bevorzugter Ausführungsbeispiele sowie anhand der Zeichnung; diese zeigt in
Figur 1 einen Schnitt durch einen Kraftsensor in Gebrauchslage;
Figur 2 einen Schnitt durch ein weiteres Ausführungsbeispiel eines Kraftsensors in Gebrauchslage;
Figur 3 einen Schnitt durch einen Kraftsensor mit aufgebauten Dickschichtwiderständen und Leitungsbahnen;
Figur 4 einen Schnitt durch den Kraftsensor gemäß Figur 3 in einer weiteren Behandlungsstufe;
Figur 5 einen Schnitt durch den Kraftsensor gemäß den Figuren 3 und 4 in einer weiteren Behandlungsstufe;
Figur 6 einen Schnitt durch den Kraftsensor gemäß Figur 3 in einer anderen Behandlungsstufe als gemäß den Figuren 4 und 5;
Figur 7 einen Schnitt durch den Kraftsensor gemäß Figur 3 nach einer weiteren erfindungsgemäßen Behandlung;
Figur 8 eine schematische Darstellung der Verteilung von Widerständen auf der Oberfläche eines Kraftsensors;
Figuren 9 und 10 schematische Darstellungen weiterer Verteilungsmöglichkeiten entsprechend Figur 8 und 10;
Figur 11 eine schematische Darstellung einer Brückenschaltung mit Temperaturkompensation nach Figur 14;
Figur 12 ein Schaltschema der Widerstände nach Figur 8;
Figur 13 ein Schaltschema der Widerstände mit überlagertem Widerstandsnetzwerk zum Offset-Abgleich;
Figur 14 ein Schaltschema gemäß Figur 12 mit einem überlagertem Widerstandsnetzwerk zum Temperaturabgleich.

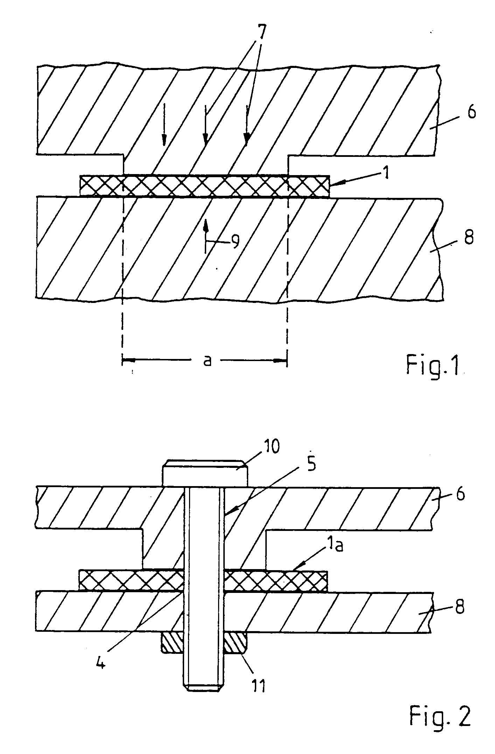

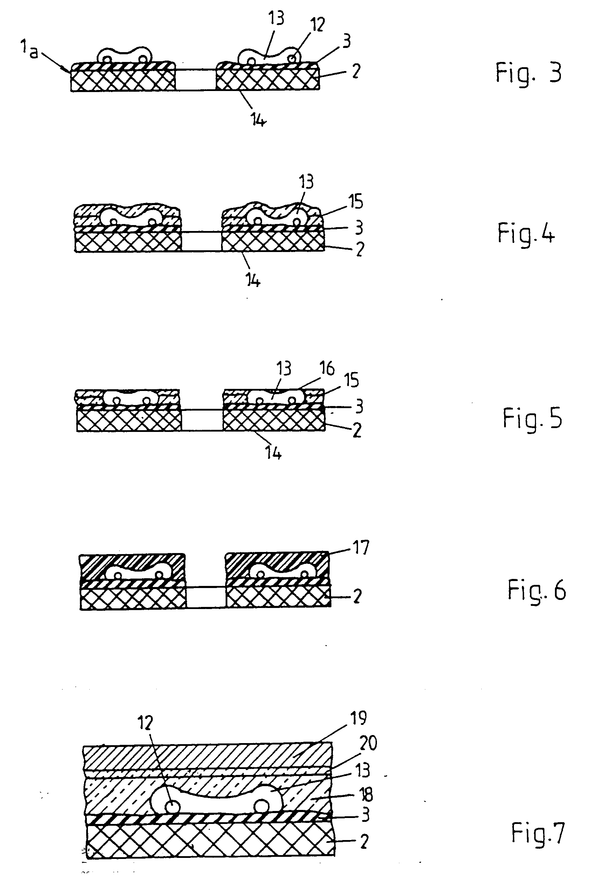

In den Figuren 1 und 2 ist ein erfindungsgemäßer Kraftsensor insgesamt mit 1 bezeichnet. Hierbei ist, wie insbesondere aus den Figuren 3 bis 7 hervorgeht, ein metallisches Substrat 2 oder ein anderes Substratmaterial mit einer Isolierschicht 3 belegt. Auf dieser Isolierschicht 3 sind dann nach speziellen Vorbehandlungen bzw. Vorbereitungsschritten Standard-Dickschicht-Prozesse aufgebaut. Näheres hierzu ist in der DE-PS 21 50 695, DE-OS 34 26 804 und Europäischen Patentanmeldung 0 171 699 beschrieben.

Das Grundsubstrat 2 wird so geformt, daß es für eine spezielle Meßaufgabe geeignet erscheint. Gemäß Figur 1 ist es eine Scheibe, während es gemäß Figur 2 ein mittleres Loch 4 besitzt, welches in Gebrauchslage von einem Schraubenbolzen 5 durchsetzt ist. Im letztgenannten Ausführungsbeispiel wird der Kraftsensor 1a quasi als Unterlegscheibe benutzt. Entsprechend Figur 1 wird der Kraftsensor 1 von einem Druckelement 6 mit Druck beaufschlagt, wie dies durch die Pfeile 7 angedeutet ist. Dabei liegt der Kraftsensor 1 einem Gegenelement 8 auf, welches entsprechend Pfeilen 9 dem aufgebrachten Druck entgegenwirkt. Die aktive Fläche, in welcher auf den Kraftsensor 1 ein Druck einwirkt, liegt im Bereich a.

Gemäß Figur 2 sind Druckelement 6 und Gegenelement 8 über den Schraubenbolzen 5 zusammengespannt, wobei diesem Schraubenbolzen 5 jenseits eines Kopfes 10 eine entsprechende Mutter 11 aufgeschraubt ist.

Wie oben erwähnt, werden entsprechend Figur 3 auf der Isolierschicht 3 Leiterbahnen 12 und Dickschichtwiderstände 13 aufgebraucht. Diese Widerstände 13 sind je nach dem Zweck des entsprechenden Kraftsensors so verteilt auf dem Substrat 2 bzw. der Isolierschicht 3 angeordnet, daß sie zum Teil innerhalb der aktiven Fläche a liegen, zum Teil jedoch auch außerhalb angeordnet sind. Durch die auf die Widerstände 13 aufgebrachten Druckkräfte andern sich die Widerstandswerte der betroffenen Widerstände proportional zur Kraft.

Ein Problem stellt jedoch die Oberflächengestaltung dieser Dickschichtwiderstände 13 dar, da die Oberfläche des Kraftsensors 1 durch das Aufbringen dieser Dickschichtstrukturen nicht mehr plan ist. Um jedoch die aufgebrachte Druckkraft homogen auf die Dickschichtwiderstände 13 wirken zu lassen, müssen Ober- und Unterfläche des Kraftsensors planparallel sein.

Hierzu ist einmal denkbar, die Dickschichtwiderstände 13 gemäß Figur 3 separat planparallel zur Unterfläche 14 des Kraftsensors 1a zu schleifen.

Ferner ist denkbar, daß die verschiedenen tieferen Niveaus neben den Widerständen 13 entsprechend Figur 4 mit Isolierglas 15 aufgefüllt oder sogar auch die Dickschichtwiderstände 13 mit Isolierglas überdruckt werden. Danach erfolgt ein Überschleifen der gesamten Oberfläche, wie dies in Figur 5 dargestellt ist, so daß eine planparallele Oberfläche 16 erreicht wird.

In einem weiteren Ausführungsbeispiel der Erfindung gemäß Figur 6 wird die gesamte Oberfläche mit einem aushärtbaren Material 17, beispielsweise einem Kunststoff, Epoxidharz oder speziellen Lack ausgegossen, so daß von sich aus eine planparallele Oberfläche 16 für die Krafteinleitung entsteht.

In einem weiteren Verfahren, dessen Ergebnis in Figur 7 dargestellt ist, werden die Leiterbahnen 12 und Dickschichtwiderstände 13 in ein Dickschichtglas 18 eingebettet. Dieses Dickschichtglas 18 ist ein niederschmelzendes Glas (300-600°C), welches die Standarddickschichtstrukturen beim Aufschmelzen nicht mehr beeinflußt. Auf dieses Dickschichtglas 18 wird dann eine metallische Gegenscheibe 19 unter Zwischenschaltung einer Glasschicht 20 aufgeglast.

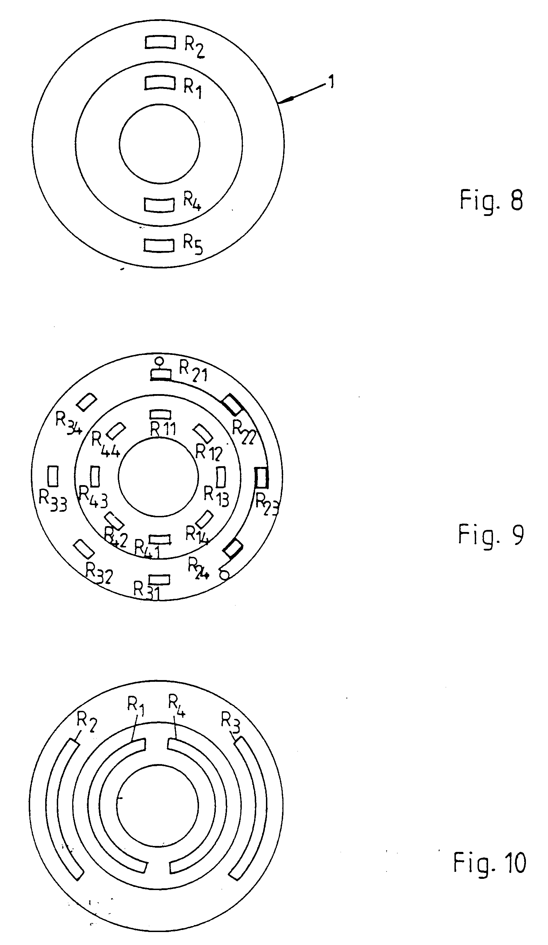

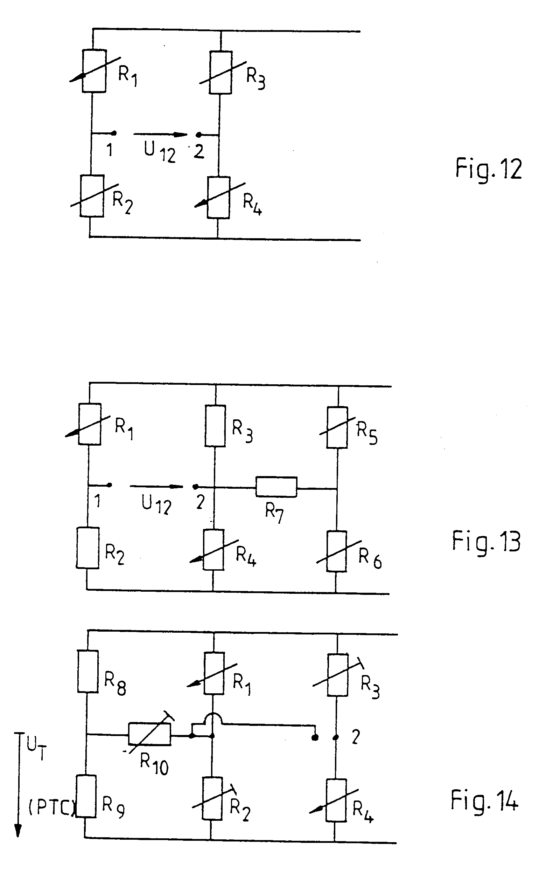

Eine weitere Verbesserung des Kraftsensors 1 bzw. dessen Wirkungsweise ergibt sich, wenn die Widerstände 13 gleichmäßig über die Fläche des Kraftsensors und insbesondere über die mit Druck beaufschlagte Flache angeordnet sind. Hierdurch kann die aufgebrachte Druckkraft über eine Addition von mehreren Widerständen oder direkt über eine Integration exakter bestimmt werden. Verschiedene derartige Verteilungen der Widerstände 13 sind in den Figuren 8 bis 10 gezeigt. Zu Figur 8 und 10 gehört die Schaltung gemäß Figur 12. Die Widerstände R₁ bis R₄ werden in einer Brückenschaltung so angeordnet, daß in jedem Brückenzweig ein veränderlicher Widerstand gegenphasig zum anderen Brückenzweig wirkt. Die Brückenwiderstände haben bis auf eine Reststreuung dasselbe Temperaturverhalten sowie dieselbe Alterungsdrift. Daraus resultiert eine geringe Temperaturabhängigkeit des Brückensignales sowie eine gute Alterungsstabilität über die Lebensdauer.

In dem Ausführungsbeispiel gemäß den Figuren 8 und 12 bzw. 10 und 12 werden die Widerstände R₁ und R₄, d. h. der innere Teil des Drucksensors 1 von einer Kraft beaufschlagt, so daß diese Widerstände R₁ und R₄ ihren Wert ändern. Die Widerstände R₂ und R₃ ändern dagegen ihren Wert nicht, da sie auch von keiner Druckkraft beaufschlagt werden.

Die Brückenschaltung hat infolge geringer Streuung der Widerstandswerte der Sensorwiderstände R₁ bis R₄ einen Offset-Fehler (Gleichanteil). Dieser Offset-Fehler wird korrigiert durch ein Widerstandsnetzwerk in Dickschichttechnik, welches durch Lasertrimmen abgeglichen wird. Bei dem Ausführungsbeispiel nach den Figuren 8 und 12 bzw. 10 und 12 geschieht dieser Offset-Abgleich durch Trimmung derjenigen Brückenwiderstände, die außerhalb der aktiven Flächen a liegen. Die Trimmfähigkeit und Stabilität wird in diesem Fall durch günstige Geometriegebung unterstützt.

Die verbleibende Temperaturabhängigkeit des abgeglichenen Brückensignales wird ebenfalls durch ein Dickschichtnetzwerk mit positivem oder negativem Temperaturkoeffizienten kompensiert.

Eine weitere Möglichkeit des Offset-Abgleiches zeigt Figur 13, bei dem der Offset-Abgleich über externe Widerstände, wie z. B. durch das Netzwerk der Widerstände R₅, R₆ und R7 durchgeführt wird. Bei der Wahl eines hohen Ankopplungswiderstandes R₇ sowie einer günstigen Geometrie ist diese Anordnung stabiler als die Brückenschaltung gemäß Figur 12.

Ein Temperaturabgleich wird ferner gemäß Figur 14 über das Netzwerk der Widerstände R₈, R₉ und R₁₀ vorgenommen. Dabei kann die Spannung U_{T} proportional T entweder in den Brückenpunkten 1 oder 2 angekoppelt werden, je nach Abhängigkeit des Brückensignales U₁₂. Die Temperaturkompensation wird durch Trimmung von R1₀ durchgeführt. Ferner kann eine temperaturabhängige Spannung U_{T} durch folgende drei Kombinationen von sensorintegrierten Dickschichtwiderständen erzeugt werden:
- R₈ (Standard), R₉ (PTC)
- R₈ (NTC), R₉ (PTC)
- R₈ (NTC), R₉ (Standard).

Hier bedeutet:
- Standard:: kleiner Temperaturkoeffizient
(< 150 ppm / °C)
- PTC:: positiver Temperaturkoeffizient
(ca. 1500 ppm / °C)
- NTC:: negativer Temperaturkoeffizient
(-2000 bis -6000 ppm / °C)

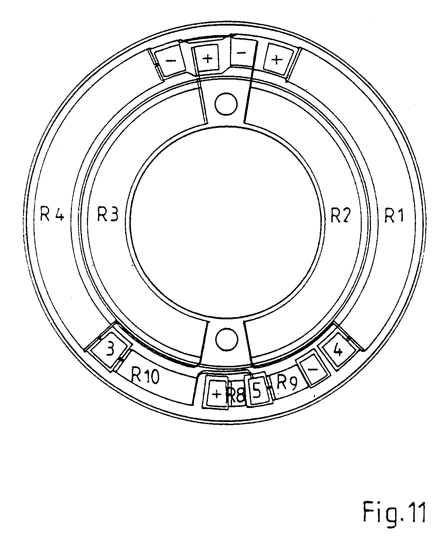

Ergebnis dieser Anordnung ist ein abgeglichenes und temperaturkompensiertes unverstärktes Sensorsignal, welches direkt am Sensorsubstrat abgegriffen werden kann, wie dies in Figur 11 gezeigt ist. Figur 11 zeigt eine Widerstandsanordnung zur Integration der Gesamtkraft mit Kompensations- und Abgleichsnetzwerk entsprechend einer Schaltung nach Figur 14.

Der Vollständigkeit halber sei noch erwähnt, daß gemäß Figur 9 eine Anordnung mit mehreren Widerständen gezeigt ist, wobei die dort vorgenommene Hintereinanderschaltung einer Aufsummierung der Kräfte an den Einzelwiderständen entspricht. Diese Anordnung ist insbesondere wegen weiterer Möglichkeiten zur Aufteilung eines gegebenen Flächenwiderstandes auf niederohmigere Sensoranordnungen von Bedeutung. In Figur 10 überdecken dagegen die Widerstände die gesamte wirkende Fläche. Diese Anordnung entspricht der Integration der Kraft über die wirksame Fläche.

Bei vielen Anwendungen ist ein verstärktes und in der Empfindlichkeit geeichtes Kraftsensorsignal erwünscht. Hierzu wird-auf dem Sensorsubstrat eine aktive Verstärkerschaltung als Löthybrid mit SMD-Bauelementen bzw. in Chip+ Wire-Technik aufgebaut. Über einen Funktionsabgleich wird dann jeder Sensor individuell geeicht und ggfs. eine Temperaturkompensation des Offsets durchgeführt. Eine geringe Temperaturabhängigkeit der Empfindlichkeit wird durch Wahl geeigneter Temperaturkoeffizienten der Widerstände im Verstärkerzweig reduziert oder bei erhöhten Genauigkeitsanforderungen individuell für jeden Sensor abgeglichen.

Weiterhin wird für spezielle Anwendungen die Schaltung sowie integrierte Schaltkreise (ICs) für eine Signalverarbeitung mit auf das Sensorsubstrat integriert, so daß beispielsweise Leistungsschalter bei bestimmten Druckwerten als Aktuatoren Steuerungsvorgänge auslösen.

Bei Bedarf wird die Auswertung des Sensorsignales in Form einer digitalen Schaltung vorgenommen. Dabei werden Eich- und Korrekturwerte in digitaler Form gespeichert. Außerdem werden zur Auswertung gewisser Zustände digitale Algorithmen verwendet und der Informationsaustausch mit einem Steuergerät über eine digitale Schnittstelle (z. B. CAN-Bus) realisiert. Diese digitale Auswerteschaltung wird, sofern es vom räumlichen Aufbau des Sensors bzw. Sensor-Aktuators sinnvoll ist (z. B. bei einem flachen Gehäuse) ebenfalls auf dem Sensorsubstrat integriert.

## Patentansprüche

1. Verfahren zum Herstellen eines Sensors (1) zum Bestimmen einer Kraft, mit der der Sensor (1) beaufschlagt wird, wobei auf einem bevorzugt metallischen Substrat (2) Dickschichtwiderstände (13), vorzugsweise in einer Brückenschaltung, über Leiterbahnen (12) gegebenenfalls auf einer Isolierschicht (3) aufgebracht werden, dadurch gekennzeichnet, daß die von der Kraft beaufschlabgare Oberfläche (16) des Sensors (1) so abgeschliffen wird, daß sie planparallel zur Unterfläche (14) des Substrats (1) verläuft.

2. Verfahren nach Anspruch 1, dadurch gekennzeichnet, daß die Oberfläche (16) der Dickschichtwiderstände (13) abgeschliffen wird.

3. Verfahren nach Anspruch 1, dadurch gekennzeichnet, daß die Dickschichtwiderstände (13) mit einem Isolierglas (15) überdruckt und dieses gegebenenfalls zusammen mit der Oberfläche (16) der Dickschichtwiderstände (13) abgeschliffen wird.

4. Verfahren nach Anspruch 1, dadurch gekennzeichnet, daß die Dickschichtwiderstände (13) in einer Gießmasse (17), bevorzugt aus Kunststoff, Epoxidharz, Lack oder dergleichen eingebettet und deren Oberfläche planparallel geschliffen wird.

5. Verfahren nach Anspruch 1, dadurch gekennzeichnet, daß die Dickschichtwiderstände in ein Dickschichtglas (18) eingebettet werden, auf dieses eine metallische Gegenscheibe (19) aufgeglast und diese abgeschliffen wird.

6. Verfahren nach Anspruch 1, dadurch gekennzeichnet, daß die Dickschichtwiderstände (13, R₁, R₂, R₃, R₄) von einem Widerstandsnetzwerk (R₅, R₆, R₇) zum Offsetabgleich überlagert sind.

7. Verfahren nach Anspruch 1, dadurch gekennzeichnet, daß die Dickschichtwiderstände (13, R₁, R₂, R₃, R₄) von einem Widerstandsnetzwerk (R₈, R₉, R₁₀) zur Temperaturkompensation überlagert sind.

## Claims

1. Process for manufacturing a sensor (1) for the determination of a force by which the sensor (1) is acted upon, in which on a preferably metallic substrate (2) there are fitted thick layer resistors (13), preferably in a bridge circuit, via conductor tracks (12), if required on an insulating layer (3), characterised in that that surface (16) of the sensor (1) which can be acted upon by the force is ground down in such a manner that it extends plane-parallel to the lower surface (14) of the substrate (1).

2. Process according to Claim 1, characterised in that the surface (16) of the thick layer resistors (13) is ground down.

3. Process according to Claim 1, characterised in that the thick layer resistors (13) are overprinted with an insulating glass (15) and the latter is ground down, if required together with the surface (16) of the thick layer resistors (13).

4. Process according to Claim 1, characterised in that the thick layer resistors (13) are embedded in a cast mass (17), preferably of plastic material, epoxide resin, lacquer or the like, and its surface is ground plane-parallel.

5. Process according to Claim 1, characterised in that the thick layer resistors are embedded in a thick layer glass (18), a metallic counterplate (19) is glazed onto the latter and the said counterplate is ground down.

6. Process according to Claim 1, characterised in that the thick layer resistors (13, R₁, R₂, R₃, R₄) have superposed thereon a resistor network (R₅, R₆, R₇) for offset balance.

7. Process according to Claim 1, characterised in that the thick layer resistors (13, R₁, R₂, R₃, R₄) have superposed thereon a resistor network (R₈, R₉, R₁₀) for temperature compensation.

## Revendications

1. Procédé de fabrication d'un capteur (1) pour déterminer un effort appliqué au capteur (1), un substrat (2) de préférence métallique portant des résistances en couche épaisse (13), branchées de préférence en pont, des chemins conducteurs (12) étant également appliqués sur la couche isolante (3), procédé caractérisé en ce que l'on meule la surface supérieure (16) sollicitée par les efforts, du capteur (1), pour que cette surface soit parallèle et plane à la surface inférieure (14) du substrat (2).

2. Procédé selon la revendication 1, caractérisé en ce que l'on meule la surface supérieure (16) des résistances en couche épaisse (13).

3. Procédé selon la revendication 1, caractérisé en ce qu'on recouvre les résistances en couche épaisse (13) avec du verre isolant (15) et le cas échéant on meule l'ensemble avec la surface supérieure (16) des résistances en couche épaisse (13).

4. Procédé selon la revendication 1, caractérisé en ce qu'on noie les résistances en couche épaisse (13) dans une masse coulée (17) de préférence de la matière plastique, une résine époxy, un vernis ou une matière analogue puis on meule les surfaces supérieures de façon plane et parallèle.

5. Procédé selon la revendication 1, caractérisé en ce que les résistances en couche épaisse sont intégrées dans une couche épaisse de verre (18) et sur celle-ci on met une contre-plaque (19) métallique et on meule celle-ci.

6. Procédé selon la revendication 1, caractérisé en ce qu'on combine aux résistances en couche épaisse (13, R₁, R₂, R₃, R₄), un réseau de résistances (R₅, R₆, R₇) pour compenser le décalage.

7. Procédé selon la revendication 1, caractérisé en ce que les résistances en couche épaisse (13, R₁, R₂, R₃, R₄) sont combinées à un réseau de résistances (R₈, R₉, R₁₀) pour la compensation en température.
